# EUROPÄISCHE PATENTANMELDUNG

(11) **EP 0 629 802 A1**
(43) Veröffentlichungstag der Anmeldung: **21.12.1994**
(21) Anmeldenummer: 93114785.4
(22) Anmeldetag: 15.09.1993
(51) Int. Cl.: F16K 17/04, E21D 15/51

(54) **Druckausgeglichenes Druckbegrenzungsventil**

(30) Priorität: 17.06.1993 DE 4319967
(71) Anmelder: RICHARD VOSS GRUBENAUSBAU GMBH, D-58239 Schwerte (DE)
(72) Erfinder: Voss, Richard, D-58239 Schwerte (DE)
(74) Vertreter: Schulte, Jörg, Dipl.-Ing.

(57) **Zusammenfassung**

Bei dem Druckbegrenzungsventil ist noch vor dem Federraum (13) eine Ableitung des Druckmediums vorgesehen, wozu die dort angeordneten Querbohrungen (14) zu einem Wasserkasten (18) mit vergrößertem Volumen erweitert ausgebildet werden. Dieser Wasserkasten liegt ringförmig um den in diesem Bereich freiliegenden Ventilkolben (8) und ist über Rücklaufbohrungen (19) mit der Rücklaufleitung verbunden. Über den Wasserkasten mit entsprechend großem Volumen ist erreicht, daß der Staudruck sich gleichzeitig auf die Feder (4) und auf den Ventilkolben auswirkt, so daß die beschriebene Neutralisation eintritt.

## Beschreibung

Die Erfindung betrifft ein Druckbegrenzungsventil für den hydraulischen Ausbau im untertägigen Berg- und Tunnelbau mit einem rohrförmigen Ventilgehäuse, dem in der Führung gegen die Kraft der im Ventilgehäuse angeordneten und einstellbaren Ventilfeder verschieblichen Ventilkolben und den im Ventilgehäuse bzw. der Führung vor dem Federraum ausgebildeten Querbohrungen, über die das Druckmedium bei Ansprechen des Ventils unter Umgehung des Federraums abspritzen kann.

Derartige Druckbegrenzungsventile sind aus der DE-OS 35 08 986.5-12 bekannt. Diese bekannten Druckbegrenzungsventile werden eingesetzt, um den untertägigen Ausbau vor Überlastung zu schützen. Solche Überlastungen treten vor allem auf, wenn der Ausbau aufgrund der auftretenden Konvergenz zusammengeschoben wird, so daß der Druck in den einzelnen Stempeln steigt. Um dann eine Überlastung zu vermeiden, wird ein Teil der in den Stempel anstehenden Druckflüssigkeit durch die Druckbegrenzungsventile genau dann abgeführt, wenn ein kritischer Druck von beispielsweise über 400 bar auftritt. Hierzu sind diese Druckbegrenzungsventile mit einer Ventilfeder ausgerüstet, die im Ventilgehäuse zwischen dem auf den Ventilkolben aufgesetzten Federteller einerseits und der Stellschraube andererseits angeordnet ist. Über den Ventilkolben und den Federteller wird die Ventilfeder dann bei auftretender Überlast zusammengedrückt, so daß der Ventilkolben in der Ventilbohrung sich verschiebt und dabei einen O-Ring überfahren kann, so daß das Druckmedium dann aus dem Stempel durch das Druckbegrenzungsventil nach außen abströmen kann. Um dieses Abströmen zu ermöglichen, ist bei dem bekannten Ventil in der Stellschraube eine Bohrung vorhanden oder auch im oberen Teil des Ventilgehäuses, wodurch eine vorteilhafte Hochschubwirkung auftritt, die die Ansprechgenauigkeit des Ventils wesentlich optimiert. Die Feder selbst wird durch Drehen der Stellschraube so eingestellt, daß das Ventil entsprechend beim vorgegebenen Druck öffnet. Aus betrieblichen und auch aus Umweltschutzgründen wird im untertägigen Berg- und Tunnelbau für derartige Druckbegrenzungsventile vorgeschrieben, daß das ausgetretene Druckmedium aufgefangen und über eine Rücklaufleitung ins System zurückgeführt werden muß. Durch den in dieser Rücklaufleitung anstehenden Druck wie auch durch den beim Durchströmen des Ventilgehäuses auftretenden Druck wird die Einstellkraft der Feder beeinflußt, so daß ein genaues Einstellen des Öffnungspunktes schwierig ist.

Aus der DE-GM 84 08 072 ist ein Druckbegrenzungsventil bekannt, bei dem zur Trockenhaltung des Federraumes eine verlängerte Führung vorgesehen ist, in der Querbohrungen ausgebildet sind, die vor dem Federraum rechtwinklig zur Ventilbohrung verlaufen und die das Druckmedium bei Ansprechen des Ventils unter Umgehung des Federraumes abführen. Der Ventilkolben ist zweigeteilt, wobei der untere Ventilkolben einen geringeren Durchmesser aufweist als der obere Teil des Ventilkolbens, der bohrungsfrei gehalten ist. Hierdurch wird erreicht, daß bei auftretendem Überdruck die beiden Teile des Ventilkolbens in der Ventilbohrung verschoben werden, wobei das Druckmedium nach Überfahren des O-Ringes im Bereich des unteren Teilkolbens über die Querbohrungen austreten kann. Auch bei diesem Ventil würde bei Anschluß einer Rücklaufleitung an die Querbohrungen aber auch schon ohne diese beim Abspritzen des Druckmediums ein Staudruck auftreten, der die eingestellte Ventilkraft so verändert, daß ein genaues Ansprechen des Ventils nicht möglich ist.

Der Erfindung liegt daher die Aufgabe zugrunde, ein vom Staudruck unabhängig wirkendes und einstellbares Druckbegrenzungsventil zu schaffen.

Die Aufgabe wird erfindungsgemäß dadurch gelöst, daß die Querbohrungen zu einem Wasserkasten mit vergrößertem Volumen erweitert ausgebildet sind, daß der Wasserkasten sich ringförmig um den in diesem Bereich freiliegenden Ventilkolben erstreckt und daß vom Wasserkasten zum Außenmantel führende Rücklaufbohrungen vorgesehen sind, die einen wasserdichten Anschluß der Rücklaufleitung ermöglichend mit Dichtringen ausgerüstet sind.

Bei derart ausgebildeten Druckbegrenzungsventilen kann die Ventilfeder genau auf den hydraulischen Druck beispielsweise 400 bar eingestellt werden, bei dem das Druckbegrenzungsventil öffnen soll. Entsteht nun beim Ausströmen des Druckmediums ein Staudruck im Wasserkasten, so neutralisiert sich dieser automatisch, weil die gleiche Kraft (Staudruck) gegen die Feder wie gegen den Kolben wirkt. Aufgrund dieses neutralisierten Staudruckes kann die Ventilfeder genau und bleibend genau eingestellt werden, ohne daß Fehler oder Probleme auftreten können. Sowohl im Bereich des Wasserkasten wie auch der anschließenden Rücklaufbohrungen auftretender Staudruck ist wie erwähnt unschädlich, wobei das ausströmende Druckmedium umweltneutral durch den wasserdichten Anschluß der Rücklaufleitung abgeführt werden kann.

Nach einer zweckmäßigen Ausbildung ist vorgesehen, daß der Ventilkolben aus dem Sackbohrung und Radialbohrungen aufweisenden und einen O-Ring überfahrenden Grundkolben und einem kopfseitig in den Federteller eingeführten, bohrungsfreien Federkolben besteht, der einen zweiten Dichtring überfahrend in der Ventilbohrung oberhalb des Wasserkastens angeordnet ist. Diese Ausbildung hat nicht nur herstellungsbedingte Vorteile, da auf vorhandene Bauteile wie den Grundkolben zurückgegriffen werden kann, sondern garantiert auch die Neutralisation des Staudruckes im Bereich des Wasserkastens. Zwar ist auch eine einteilige Ausführung des Ventilkolbens denkbar, doch ist durch die beschriebene Ausbildung auch gleichzeitig eine Art "Angriffsfläche" für den Staudruck geschaffen.

Um den Staudruck im Bereich des Wasserkasten bzw. durch den Wasserkasten wirksam zu neutralisieren, ist erfindungsgemäß vorgesehen, daß Grundkolben und Federkolben den gleichen Durchmesser aufweisen. Eine gleichmäßige Beaufschlagung der Feder und auch des Ventilkolbens ist nur bei entsprechender Bemessung von Grundkolben und Federkolben sichergestellt, wenn die zweiteilige Ausbildung des Ventilkolbens gewünscht bzw. als zweckmäßig verwirklicht wird.

Für die im Bereich des Ventilkolbens einzusetzenden Dichtringe bzw. O-Ringe wird üblicherweise ein Material verwendet, das eine bis zu 90 Shore A-Härte aufweist. Erfindungsgemäß ist nun bei der zweiteiligen Ausführung vorgesehen, daß der O-Ring eine Härte von 92 bis 94 Shore A und der Dichtring von unter 90 Shore A aufweisen. Wobei diese Variation den großen Vorteil hat, daß die Abdichtung im Bereich des Federkolbens über einen "weichen" Dichtring erfolgt, während der O-Ring, an dem das Druckmedium vorbeiströmt, eine entsprechend größere Härte aufweist. Diese größere Härte erbringt bessere Standzeiten und sichert gleichzeitig eine wirksame Abdichtung auch bei den hier notwendigen hohen Drücken.

Die besondere Ausbildung des O-Ringes ermöglicht weiterhin, daß die Radialbohrungen des Grundkolbens, der den O-Ring überfahrend angeordnet ist, im Durchmesser gleich oder größer als der O-Ring bemessen sind. Aufgrund der größeren Härte ist eine Überbeanspruchung des O-Ringes hier nicht zu befürchten, so daß durch die entsprechende Wahl der Durchmesser der Radialbohrungen die Gewähr gegeben ist, daß eine größere Menge an Druckmedium austreten kann und zwar rechtzeitig.

Ein ausreichend großer Aufnahmeraum zum Druckausgleich ist erforderlich, wobei erfindungsgemäß vorgesehen ist, daß der Wasserkasten den zwei- bis fünffachen, vorzugsweise den dreifachen Querschnitt der Rücklaufbohrungen aufweist. Der im Wasserkasten erzeugte Staudruck wird dabei vorteilhaft neutralisiert, so daß wie schon erwähnt eine negative Veränderung im Bereich der Ventilfeder bzw. des Ventilkolbens nicht wirksam werden kann. Die gleiche Kraft aus dem Staudruck wirkt gegen die Ventilfeder einerseits und anderseits gegen den Ventilkolben.

Eine zweckmäßige Ausbildung der Erfindung sieht vor, daß die Rücklaufbohrungen vom Wasserkasten ausgehend achsparallel zur Ventilbohrung verlaufend in der Führung und im Abstand zur Ventilbohrung bzw. deren Aus-/Eintritt austretend ausgebildet sind. Über die Rücklaufleitung kann somit das ablaufende bzw. abgespritzte Druckmedium aufgefangen und wirksam in die Rücklaufleitung eingeleitet werden, wozu verschiedene Lösungen denkbar sind. Da die Ventilbohrung und die Rücklaufbohrungen im Abstand zueinander angeordnet sind, können somit durch geschickte Anordnung beispielsweise in einem Block die notwendigen Anschlußmöglichkeiten für die Rücklaufleitung bzw. die Steuerleitung für das Druckbegrenzungsventil bzw. die Versorgungsleitung des Verbrauchers geschaffen werden.

Eine andere Möglichkeit sieht vor, daß die Rücklaufbohrungen radial an den Wasserkasten anschließend zum Außenmantel führend ausgebildet sind. Diese Ausführung erfordert zwar besondere Abdichtungen im Bereich des Außenmantels des Druckbegrenzungsventils, hat aber den Vorteil, daß das Druckmedium ohne weitere Umleitung im Bereich des Druckbegrenzungsventils in die Rücklaufleitung abströmen kann. Der notwendige Anschluß der Rücklaufleitung wird dabei beispielsweise ebenfalls durch einen Block geschaffen, nur daß das Druckbegrenzungsventil entsprechend weiter eingeführt werden muß, wobei beidseitig der vier vorgesehenen, radial verlaufenden Rücklaufbohrungen die Dichtringe in im Außenmantel ausgebildeten Nuten angeordnet sind. Diese Dichtringe sorgen für die notwendige Abdichtung, so daß über die Querbohrungen und über den umschließenden Block beispielsweise das Druckmedium der Rücklaufleitung zugeführt werden kann. Ein zusätzlicher Staudruck kann sich hierbei nicht auswirken.

Die radial an den Wasserkasten anschließenden Rücklaufbohrungen können im Querschnitt so bemessen werden, daß vier ausreichen, um die austretende Druckmediummenge sicher abzuleiten. Da die achsparallel zur Ventilbohrung verlaufenden Rücklaufbohrungen im Mantel der Führung ausgebildet werden müssen, ist es zweckmäßig, mit geringeren Durchmessern zu arbeiten, was dadurch möglich wird, daß achsparallel zur Ventilbohrung 6 - 8 Rücklaufbohrungen im Abstand in der Führung ausgebildet sind. Dabei ist endseitig der Führung ein Dichtring vorgesehen, der für den wirkamen Abschluß und das sichere Ableiten des Druckmediums in Richtung Rücklaufleitung sicher sorgt.

Bei all diesen Druckbegrenzungsventilen ist von Seiten des Erfinders vorgesehen, daß sie auf möglichst gleichbleibende Grundform bzw. Grundteile zurückgreifen und daß sie in der Herstellung keine übermäßigen Belastungen darstellen. Diesen Auflagen genügt die vorliegende Erfindung insbesondere dann, wenn die Führung zweiteilig ausgebildet ist, wobei das den Federkolben aufnehmende Oberteil in die Ventilhülse und das den Grundkolben aufnehmende Unterteil in das Oberteil einschraubbar und der Wasserkasten als Ausnehmung im Boden des Oberteils ausgebildet ist. Damit kann eine Art Baukastensystem verwirklicht werden, das gegebenenfalls auch einen einteiligen Ventilkolben zum Einsatz zuläßt, wobei dann einfach auf eines der Teile der Führung verzichtet wird bzw. die Führung einteilig ausgebildet wird. Besonders vorteilhaft ist es bei der Erfindung, daß der Wasserkasten ein entsprechend großes und weiter vorne schon erläutertes Volumen bekommt, wozu das Oberteil einfach entsprechend geformt wird. Die einzelnen Teile, daß heißt Oberteil und Unterteil werden miteinander verschraubt und dann auch mit dem Ventilgehäuse, so daß eine schnelle und genaue Montage gesichert ist.

Die Erfindung zeichnet sich insbesondere dadurch aus, daß ein Druckbegrenzungsventil geschaffen ist, das ein vom Staudruck, der nun einmal auftritt und zwar unabhängig von der jetzt vorgesehenen Rücklaufleitung, immer genau ansprechendes Druckbegrenzungsventil geschaffen ist. Der Staudruck wird neutralisiert und zwar durch die Ausbildung des Wasserkastens und die Ausbildung der Rücklaufbohrungen, so daß ein druckausgeglichenes Druckbegrenzungsventil bzw. ein vom Rückstau unabhängig wirkendes Druckbegrenzungsventil verwirklicht ist.

Die Ventilfeder kann genau auf den hydraulischen Druck beispielsweise 400 bar eingestellt werden, ohne daß beim Öffnen ein nachteiliger Staudruck wirksam werden kann. Der aufgetretene Staudruck wird vielmehr neutralisiert und damit unschädlich gemacht.

Weitere Vorteile werden durch die Ausbildung der O-Ringe bzw. Dichtringe geschaffen, die genau auf den jeweiligen Einsatzfall zugeschnitten sind, so daß nicht nur hohe Standzeiten sondern auch vorteilhafte Abdichtungen immer gewährleistet sind. Ein für den untertägigen Einsatz geeignetes Druckbegrenzungsvetil wird dementsprechend mit einem Führungsrücklauf oder mit einem Wasserkastenrücklauf ausgebildet.

Weitere Einzelheiten und Vorteile des Erfindungsgegenstandes ergeben sich aus der nachfolgenden Beschreibung der zugehörigen Zeichnungen, in denen bevorzugte Ausführungsbeispiele mit den dazu notwendigen Einzelheiten und Einzelteilen dargestellt sind. Es zeigen:
- Fig. 1: ein Druckbegrenzungsventil mit Führungsrücklauf,
- Fig. 2: das in Fig. 1 dargestellte Druckbegrenzungsventil mit Anschlußblock und
- Fig. 3: ein Druckbegrenzungsventil mit Wasserkastenrücklauf.

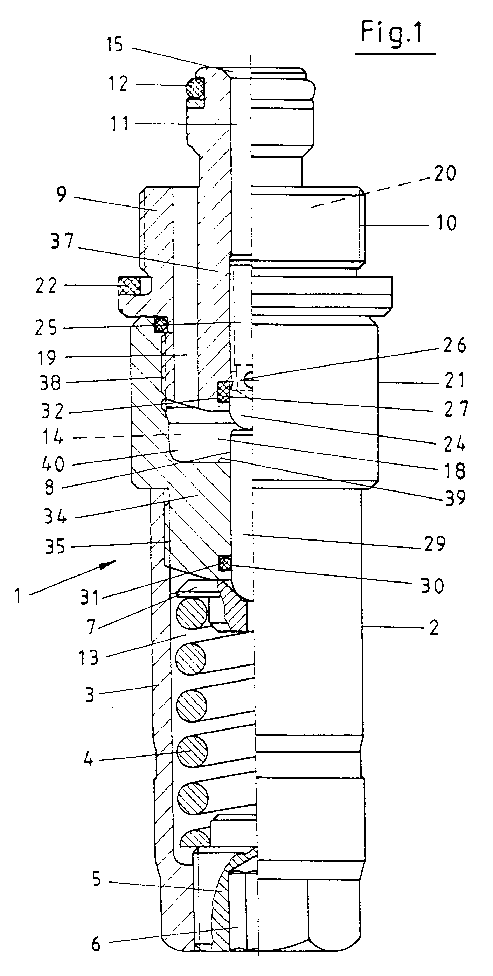

Bei dem in Figur 1 dargestellten Druckbegrenzungsventil **1** handelt es sich um ein sogenanntes O-Ring-Ventil, das vor allem im untertägigen Bergbau eingesetzt wird, um den hier nicht dargestellten hydraulischen Ausbau, mit dem die bergmännisch hergestellten Hohlräume offengehalten werden, abzusichern sind.

Das Druckbegrenzungsventil **1** verfügt über ein Ventilgehäuse **2**, das zunächst einmal aus der die Ventilfeder **4** aufnehmenden Ventilhülse **3** und zum anderen aus der Führung **9** besteht, die in die Ventilhülse **3** eingeschraubt ist.

Die Ventilfeder **4**, die sich einmal an der Stellschraube **5** und zum anderen am Federteller **7** abstützt, kann mit Hilfe des Sechskantimbus **6** verstellt werden, so daß beispielsweise genau 400 bar Öffnungsdruck gewährleistet sind.

Die Ventilfeder **4** stützt sich über den Federteller **6** auf dem Ventilkolben **8** ab, der in der in der Führung **9** ausgebildeten Ventilbohrung **11** gegen den Druck der Ventilfeder **4** verschieblich angeordnet ist.

Der Ventilkolben **8** ist mit Radialbohrungen und mit einer in die Ventilbohrung **11** hineinragenden bzw. an diese angeschlossenen Sackbohrung ausgerüstet.

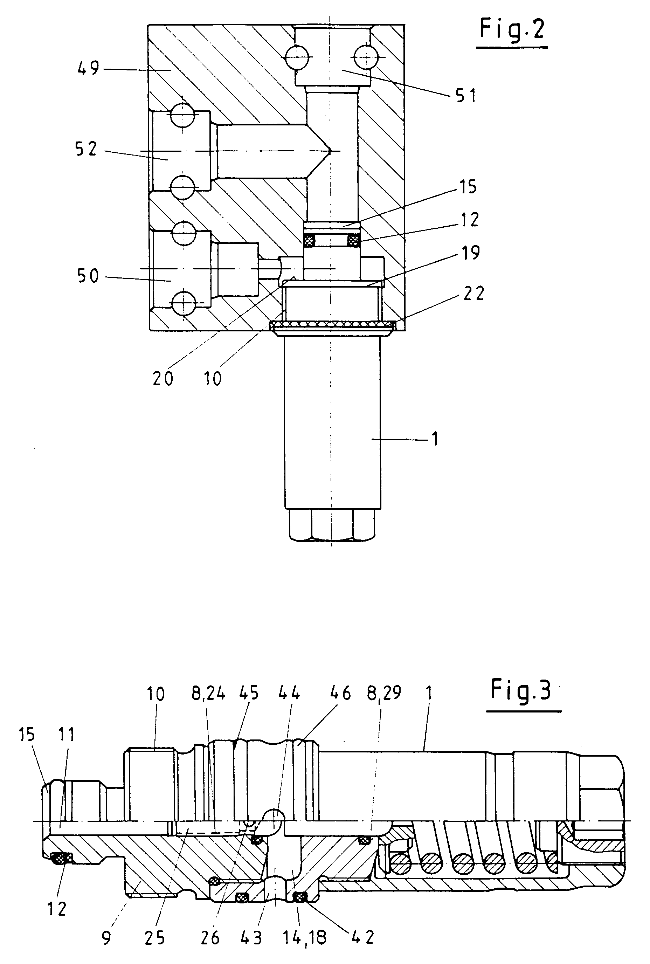

Die Führung **9** verfügt über ein Anschlußgewinde **10**, um beispielsweise in den in Figur 2 gezeigten Block eingeschraubt zu werden. Der Dichtring **12** sorgt dabei dafür, daß die Ventilbohrung **11** bzw. deren Aus-/Eintritt **15** von weiteren in der Führung **9** ausgeführten Bohrungen abgedichtet werden kann. Näheres hierzu wird hinten erläutert.

Bei dem in Figur 1 dargestellten Druckbegrenzungsventil wird der Federraum **13**, der die Ventilfeder **4** aufnimmt, trocken gehalten. Dies wird dadurch erreicht, daß über im Abstand vor dem Federraum **13** angeordneten Querbohrungen **14** das austretende Druckmedium abgeführt wird.

Die Querbohrungen **14** sind bei der Figur 1 und den weiteren Figuren ersichtlichen Ausführungen zu einem Wasserkasten **18** erweiternd ausgebildet, der über die Rücklaufbohrungen **19**, **20** mit dem Außenbereich verbunden ist. Die Rücklaufbohrungen **19, 20** treten bei Figur 1 nicht in den direkten Bereich des Außenmantels **21** aus, sondern vielmehr wie Figur 1 zeigt, im Bereich des Aus-/Eintritts **15** der Ventilbohrung **11** und zwar im Abstand dazu, so daß eine getrennte Versorgung bzw. Anbindung möglich ist. Der Dichtring **22** sorgt dabei dafür, daß auch die Rücklaufbohrungen (19, 20) wirksam im Eintrittsbereich in den Block, der hier ja nicht dargestellt ist, sondern vielmehr in Figur 2, abgedichtet wird.

Der Ventilkolben **8** besteht bei der aus Figur 1 aber auch bei der aus Figur 3 ersichtlichen Ausführung aus dem Grundkolben **24**, der mit einer Sackbohrung **25** und den Radialbohrungen **26** ausgerüstet ist und über den O-Ring **27** abgedichtet wird sowie aus dem Federkolben **29**, der seinerseits über einen Dichtring **30** wirksam beim Verschieben in Richtung Federteller **7** abzudichten ist. Tritt infolge beispielsweise der Konvergenz ein über 400 bar liegender Druck auf und wird über die Ventilbohrung **11** auf den Ventilkolben **8** bzw. den Grundkolben **24** geleitet, so öffnet das Ventil. Dieses Öffnen des Druckbegrenzungsventils **1** erfolgt durch Verschieben des Grundkolbens **24** über den O-Ring **27**, so daß nun das Druckmedium über die Sackbohrung **25** und die Radialbohrungen **26** in dem Wasserkasten **18** austreten kann.

Im Bereich des Wasserkastens **18** liegt der Ventilkolben **8** bzw. der Grundkolben **24** und der Federkolben **29** frei, so daß hier ein Staudruckausgleich möglich wird. Von Seiten des im Wasserkasten **18** herschenden Staudruckes wirkt eine gleich große Kraft gegen die Ventilfeder **4** wie auch gegen den Grundkolben **24** und damit den Öffnungsdruck.

Der O-Ring **27** liegt in der Nut **32**, während der Dichtring **30** in der Nut **31** liegt und somit einwandfrei durch die einzelnen Teile des Ventilkolbens **8** überfahren werden kann.

Deutlich ist, daß der Querschnitt des Wasserkastens **18** wesentlich größer ist als der Querschnitt der Rücklaufbohrungen **19, 20**.

Aufgrund des Staudruckausgleiches bzw. seiner Neutralisation ist ein genaues Ansprechen des Druckbegrenzungsventils und ein immer gleichmäßiges Abführen des Druckmediums gewährleistet; es ist ein druckausgleichendes Druckbegrenzungsventil geschaffen.

Bei der aus Figur 1 aber auch aus Figur 3 ersichtlichen Ausführung besteht die Führung **9** aus zwei Teilen, nämlich dem Oberteil **34**, das über das Gewinde **35** in die Ventilhülse **3** eingeschraubt ist sowie aus dem Unterteil **37**, das über das Gewinde **38** seinerseits in das Oberteil **34** eingeschraubt ist. Es versteht sich, daß das Gewinde **35** und das Gewinde **38** jeweils korrespondierende Gegengewinde in den aufnehmenden Teilen haben. Im Boden **39** des Oberteils ist eine Ausnehmung **40** vorgesehen, so daß sich quasi naturgemäß ein Wasserkasten **18** großen Volumens ergibt. Deutlich wird, daß dabei die Rücklaufbohrungen **19, 20** einfach im Unterteil **37** ausgebildet sind, so daß eine zweckmäßige und sichere Fertigung dieser einzelnen Teile gewährleistet werden kann.

Weiter oben ist bereits darauf hingewiesen worden, daß der Ventilkolben **8** aus dem Grundkolben **24** und dem Federkolben **29** besteht, wobei beide einen O-Ring **27** bzw. einen Dichtring **30** überfahrend ausgebildet sind. Die beiden Ringe **27, 30** weisen eine unterschiedliche Härte auf. Nach der Offenbarung der Erfindung ist der O-Ring **27** mit einer Härte von 92 bis 94 Shore A und der Dichtring **30** mit einer Härte unter 90 Shore A versehen bzw. bestehen aus einem entsprechenden Material, so daß insbesondere der den größeren Belastungen unterliegende O-Ring **27** hohe Standzeiten erlaubt, andererseits aber auch sicherstellt, daß die Radialbohrungen **26** einen deutlich größeren Durchmesser als der Dichtring bzw. als der O-Ring **27** selbst aufweisen können. Große Durchflußmengen sind somit erreichbar.

Figur 2 zeigt einen Ventilblock **49**, in den das Druckbegrenzungsventil **1** eingesetzt ist. Dies erfolgt durch Eindrehen mit Hilfe des Anschlußgewindes **10**. Für eine Abdichtung der hier nur angedeuteten Rücklaufbohrungen **19, 20** sorgt der Dichtring **22**, während der Dichtring **12** den Aus-/Eintritt **15** der Ventilbohrung **11** abdichtet. Im Block **49** ist eine Bohrung vorgesehen, die den Anschluß einer Rücklaufleitung **50** vorgibt, so daß das aus den Rücklaufbohrungen **19, 20** ausströmende Druckmedium abgeführt werden kann. Die Rücklaufleitung **50** bzw. der entsprechende Anschluß im Block **49** ist als Steckanschluß ausgebildet. Das Druckbegrenzungsventil erhält den Steuerdruck über die Steuerleitung **51**, wobei eine Beeinflussung beispielsweise der Rücklaufleitung ausgeschlossen ist, weil über die Abdichtung **12** diese Bohrung gesperrt ist. Die Steuerleitung **51** ist durch die im Block **49** ausgebildete Bohrung mit der Versorgungsleitung **52** zu verbinden.

Figur 3 schließlich zeigt insofern eine Variante des erfindungsgemäßen Druckbegrenzungsventiles auf, als hier die Rücklaufbohrungen nicht achsparallel zur Ventilbohrung **11** angeordnet sind, sondern vielmehr radial dazu, die dementsprechend auch mit den Bezugszeichen **43, 44** versehen sind, um diesen Unterschied herauszustellen. Aus diesem Grund kann das in Figur 3 gezeigte Druckbegrenzungsventil auch als Druckbegrenzungsventil mit Wasserkastenrücklauf bezeichnet werden. Diese radiale Anordnung der Rücklaufbohrungen **43, 44** hat den Vorteil, daß eine weitere Umlenkung des Druckmediumstromes nicht erforderlich ist.

Bei dieser Ausbildung müssen im Außenmantel **21** entsprechende Abdichtungsmöglichkeiten gesondert geschaffen werden, was wie Figur 3 verdeutlicht, durch die Dichtringe **42, 45** geschieht, die beidseitig der Austrittsöffnungen der Rücklaufbohrungen **43, 44** angeordnet sind. Sie liegen in Nuten **46** und sind damit sicher angeordnet, so daß das gesamte Druckbegrenzungsventil **1** entsprechend weit in einen hier nicht dargestellten Block einführbar ist.

Im übrigen wirkt das Druckbegrenzungsventil gemäß Figur 3 ähnlich bsw. genauso wie das in Figur 1 dargestellte, nur daß hier wie erwähnt die Rücklaufbohrungen **43, 44** unterschiedlich von den Rücklaufbohrungen **19, 20** ausgebildet sind.

Alle genannten Merkmale, auch die den Zeichnungen allein zu entnehmenden, werden allein und in Kombination als erfindungswesentlich angesehen.

## Patentansprüche

1. Druckbegrenzungsventil für den hydraulischen Ausbau im untertägigen Berg- und Tunnelbau mit einem rohrförmigen Ventilgehäuse, dem in der Führung gegen die Kraft der im Ventilgehäuse angeordneten und einstellbaren Ventilfeder verschieblichen Ventilkolben und den im Ventilgehäuse bzw. der Führung vor dem Federraum ausgebildeten Querbohrungen, über die das Druckmedium bei Ansprechen des Ventils unter Umgehung des Federraums abspritzen kann,
**dadurch gekennzeichnet,**
daß die Querbohrungen (14) zu einem Wasserkasten (18) mit vergrößertem Volumen erweitert ausgebildet sind, daß der Wasserkasten sich ringförmig um den in diesem Bereich freiliegenden Ventilkolben (8) erstreckt und daß vom Wasserkasten zum Außenmantel (21) führende Rücklaufbohrungen (19, 20; 43, 44) vorgesehen sind, die einen wasserdichten Anschluß der Rücklaufleitung (50) ermöglichend mit Dichtringen (22; 42, 45) ausgerüstet sind.

2. Druckbegrenzungsventil nach Anspruch 1,
**dadurch gekennzeichnet,**
daß der Ventilkolben (8) aus dem Sackbohrung (25) und Radialbohrungen (26) aufweisenden und einen O-Ring (27) überfahrenden Grundkolben (24) und einem kopfseitig in den Federteller (7) eingeführten, bohrungsfreien Federkolben (29) besteht, der einen zweiten Dichtring (30) überfahrend in der Ventilbohrung (11) oberhalb des Wasserkastens (18) angeordnet ist.

3. Druckbegrenzungsventil nach Anspruch 2,
**dadurch gekennzeichnet,**
daß Grundkolben (24) und Federkolben (29) den gleichen Durchmesser aufweisen.

4. Druckbegrenzungsventil nach Anspruch 2,
**dadurch gekennzeichnet,**
daß der O-Ring (27) eine Härte von 92 bis 94 Shore A und der Dichtring (30) unter 90 Shore A aufweisen.

5. Druckbegrenzungsventil nach Anspruch 1 und Anspruch 2,
**dadurch gekennzeichnet,**
daß die Radialbohrungen (26) des Grundkolbens (24), der den O-Ring (27) überfahrend angeordnet ist, im Durchmesser gleich oder größer als der O-Ring (27) bemessen sind.

6. Druckbegrenzungsventil nach Anspruch 1,
**dadurch gekennzeichnet,**
daß der Wasserkasten (18) den zwei- bis fünffachen, vorzugsweise den dreifachen Querschnitt der Rücklaufbohrungen (19, 20; 43, 44) aufweist.

7. Druckbegrenzungsventil nach Anspruch 1,
**dadurch gekennzeichnet,**
daß die Rücklaufbohrungen (19, 20) vom Wasserkasten (18) ausgehend achsparallel zur Ventilbohrung (11) verlaufend in der Führung (9) und im Abstand zur Ventilbohrung (11) bzw. deren Aus-/Eintritt (15) austretend ausgebildet sind.

8. Druckbegrenzungsventil nach Anspruch 1,
**dadurch gekennzeichnet,**
daß die Rücklaufbohrungen (43, 44) radial an den Wasserkasten (18) anschließend und zum Außenmantel (21) führend ausgebildet sind.

9. Druckbegrenzungsventil nach Anspruch 7,
**dadurch gekennzeichnet,**
daß beidseitig der vier vorgesehenen radial verlaufenden Rücklaufbohrungen (43, 44) die Dichtringe (42, 45) in im Außenmantel (21) ausgebildeten Nuten (46) angeordnet sind.

10. Druckbegrenzungsventil nach Anspruch 6,
**dadurch gekennzeichnet,**
daß achsparallel zur Ventilbohrung (11) sechs bis acht Rücklaufbohrungen (19, 20) in der Führung (9) ausgebildet sind.

11. Druckbegrenzungsventil nach Anspruch 1 und Anspruch 2,
**dadurch gekennzeichnet,**
daß die Führung (9) zweiteilig ausgebildet ist, wobei das den Federkolben (29) aufnehmende Oberteil (34) in die Ventilhülse (3) und das den Grundkolben (24) aufnehmende Unterteil (37) in das Oberteil einschraubbar und der Wasserkasten (18) als Ausnehmung (40) im Boden (39) des Oberteils ausgebildet ist.
